# EUROPEAN PATENT SPECIFICATION

(11) **EP 2 551 127 B1**
(45) Date of publication and mention of the grant of the patent: **06.04.2016**
(21) Application number: 12176305.6
(22) Date of filing: 13.07.2012
(51) Int. Cl.: B60C 9/00

(54) **Hybrid cord composed of aramid cord and nylon 66 cord, and pneumatic tire using the same as reinforcing cord**
Hybridkord aus Aramidseil und Nylon 66-Kord, und Luftreifen damit als verstärkender Kord
Câble hybride composé de câble d'aramide et de nylon 66 et pneu l'utilisant ledit câble de renforcement

(30) Priority: 25.07.2011 KR 20110073613
(43) Date of publication of application: 30.01.2013
(73) Proprietor: Hankook Tire Co., Ltd., Seoul 135-723 (KR)
(72) Inventor: Kim, Nam Su, 302-280 Daejeon (KR)
(74) Representative: McCartney, Jonathan William

(56) References cited:
- EP-A1- 2 045 379
- DE-A1-102008 037 615
- US-B1- 6 425 426

## Description

### BACKGROUND OF THE INVENTION

### 1. Field of the Invention

The present invention relates to a pneumatic tire for passenger cars, which uses a hybrid cord reinforced by having a particular twist count as a reinforcing belt, and more particularly, to a high-performance radial tire in which high speed durability and steering stability are enhanced by applying cords that have different second twist counts and different first twist counts to reinforcing belts.

### 2. Description of the Related Art

A large number of technologies for applying aramid fibers as tire cord yarns have been disclosed in the field of tire manufacturing industry (see Korean Patent Application Laid-Open Nos. 2009-0164609, 2009-0114131, 2010-0006195, and the like).

Furthermore, technologies related to hybrid cords that are composed of aramid filaments and nylon filaments have also been disclosed in the field of tire industry (see Korean Patent Application Laid-Open Nos. 1989-0012812 and 2006-012601; Japanese Patent Application Laid-Open No. 2009-132324; and the like).

Japanese Patent Application Laid-Open No. 2009-132324 describes a composite fiber cord in which two strands of aramid filaments and one strand of a Nylon 46 filament are subjected to first twist and second twist in opposite directions such that the second twist coefficient of the composite fiber cord is adjusted to 1700 to 2700, and thereby high speed durability and flat spot resistance are enhanced.

Documents EP2045379 A1 and DE 102008037615 A1 disclose a hybrid cord according to the preamble of claim 1.

In tires, belts constitute very important factors which disperse stress from the ground surface during vehicle running and maintain the tire footprint shape, and thereby affect the running performance, wear and brake performance. Among these factors, a reinforcing belt plays the role of suppressing the displacement of a steel belt during vehicle running and thereby maintains the tire performance.

Principal characteristics required from such a reinforcing belt include heat-resistant adhesive power, contractile force, modulus retention ratios at normal temperature and high temperatures, and the like. Among these characteristics, heat-resistant adhesive power is a factor which exerts the greatest influence on the durability of tires, because when a reinforcing belt that is located between the belts and the tread, which undergoes the severest heat generation in the tire, is subjected to aging under high temperature during running due to its positional characteristics, the reinforcing belt must maintain the adhesive power at a certain level. Contractile force has an effect of preventing the phenomenon in which durability is deteriorated due to tire expansion caused by an increase in temperature during running, through the contraction of the reinforcing belt. A modulus is a factor which affects the comfort of ride and steering stability, and a reinforcing belt having a large modulus tends to reduce the change in the shape of a steel belt that is caused by the force transmitted from the outside, and thereby enhances steering stability. However, on the other hand, a reinforcing belt having a large modulus tends to mitigate the comfort of ride.

Tires for passenger cars make use of cords formed of polyethylene terephthalate (PET), rayon, nylon and the like are used. A PET cord has inferior heat-resistant adhesive power and has its modulus greatly decreased at high temperatures, and thus, it is found difficult to apply a PET cord as a reinforcing belt. Rayon has almost no contractile force, has low fatigue resistance, and cannot support a steel belt. Therefore, it is impossible to use rayon in tires. Lastly, in the case of nylon, which is currently widely used, Nylon 66 is advantageous, compared with Nylon 6, in that the heat-resistant adhesive power is excellent, and the modulus decrement at high temperatures is low. Thus, it can be said that Nylon 66 is a material for reinforcing belt that is currently most frequently used all over the world. However, since the modulus which is considered as the most fundamental characteristic of nylon is very low, when nylon is applied to high performance radial tires for which there is a high possibility that the internal temperature of the tire increases as a result of high speed running, the durability performance is adversely affected.

### SUMMARY OF THE INVENTION

Accordingly, it is an object of the present invention to provide a high performance radial tire which has enhanced high speed durability and steering stability without any change in the comfort of ride, by applying a hybrid cord obtained by combining an aramid cord and a Nylon 66 cord.

According to the present invention an aramid-nylon 66 hybrid cord according to claim 1 is provided. A preferred embodiment is defined in dependent claim 2.

The radial tire according to the present invention can have its high speed durability and steering stability enhanced by 10% to 15% without compromising the comfort of ride, by using two first twists having elastic moduli that are different from each other, and the difference in the twist count of the respective first twists.

More particularly, by doubling and twisting cords having high elastic module while maintaining the twist count of the cord having a lower elastic modulus low at the time of the production of a hybrid cord, the characteristics of the cord having a relatively lower elastic modulus are caused to be exhibited during low speed running, and the characteristics of the cord having a relatively higher elastic modulus are caused to be exhibited during high speed running. Accordingly, at the time of low speed running, a cord having excellent fatigue performance such as nylon is applied so as to maintain the comfort of ride unchanged, and at the time of high speed running, a cord having excellent heat resistant performance such as aramid is applied so as to suppress tire expansion caused by an increase in temperature inside the tire. Thereby, high speed durability and steering stability are enhanced to or above a certain level.

Embodiments of the present invention will be described in more detail.

A pneumatic tire for passenger cars is described which uses a hybrid cord obtained by twisting together an aramid cord and a Nylon 66 cord.

Since Nylon 66 is excellent in the heat resistant adhesive power, contractile force, and the elastic modulus at a low temperature and under a low load, Nylon 66 is used for the application in reinforcing belts for tires and plays the role of maintaining the comfort of ride and steering stability of the tire. However, it is considered that this is effective only in the sections of low speed and general economic speed. As time passes, passenger cars acquire improved performance, and accordingly, there is an increasing demand for tire durability performance upon high speed running. For this reason, when Nylon 66 is used alone, the shape stability of the tire at the time of high speed running cannot be secured. In order to maintain the elastic modulus at high temperatures, the inventors of the present invention solved the problem by using a high elastic modulus material such as aramid in combination with Nylon 66. At this time, in order to exhibit the characteristics of aramid and Nylon 66, the twist counts of the first twist were made different from each other such that the twist count of a Nylon 66 cord was adjusted to 50 TPM (twists per meter) to 190 TPM, while the twist count of an aramid cord was adjusted to 200 TPM to 350 TPM. The first twist was adjusted such that the twist count of the Nylon 66 cord would be always lower than the twist count of aramid cord. When the twist count of the first twist of the aramid cord which has a relatively lower elongation ratio is kept lower than the twist count of the first twist of the Nylon 66 cord, the characteristics of nylon at the time of low speed running cannot be realized. When the twist count of the first twist of the aramid cord is adjusted to 200 TPM or less, fatigue performance of the tire is decreased. On the contrary, when the twist count of the first twist of the aramid cord is adjusted to 350 TPM or more, strength is decreased due to the friction between filaments, and the durability performance of the tire is deteriorated.

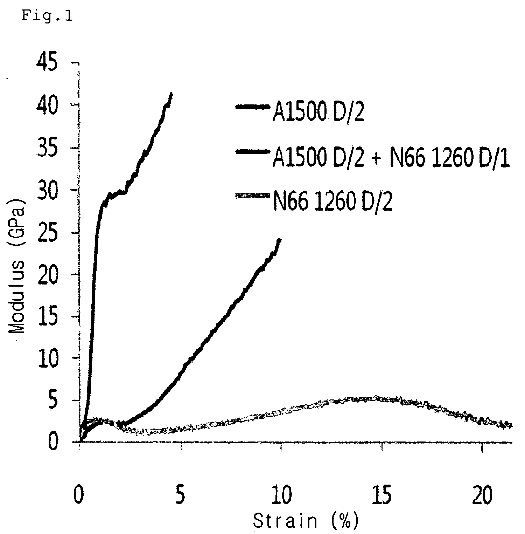

Furthermore, the aramid hybrid cord should be such that the ratio of the elastic modulus at an elongation ratio of 3% to 5% with respect to the elastic modulus at an elongation of 0.5% to 1% is in the range of from 1 to 10. If the ratio of elastic modulus is less than 1, the shape stability of the tire according to the characteristics of nylon upon high speed running becomes poor, and the running performance of the tire is deteriorated. If the ratio of elastic modulus is greater than 10, there is a defect that the high elastic modulus characteristic of the aramid cord is disadvantageous in the forming of the tire, and the comfort of ride during running is deteriorated [see Table 1 and Fig. 1].

The evaluation of the pneumatic radial tire according to the present invention was carried out by using a radial tire in which the original Nylon 66 reinforcing belt was replaced by an aramid-Nylon 66 hybrid cord-reinforced belt, and no change was made on the design factors other than the alteration of the reinforcing belt.

The high performance radial tire according to the present invention exhibits improved high speed durability and improved steering stability without any change in the comfort of ride, by applying a hybrid cord obtained by combining an aramid cord and a Nylon 66 cord as a reinforcing belt.

### BRIEF DESCRIPTION OF THE DRAWINGS

Fig. 1 is a graph illustrating the relationships between modulus and strain in an aramid cord alone, a hybrid cord of an aramid cord and a Nylon 66 cord, and a Nylon 66 cord alone.

### DESCRIPTION OF THE PREFERRED EMBODIMENTS

Hereinafter, the present invention will be described in detail by way of Examples, but the present invention is not intended to be limited to the Examples.

**[Table 1]**

| | Examples 1 | Example 2 | Comparative Example 1 |
|---|---|---|---|
| Type | Aramid 1500 D/2 + Nylon 66 1260 D/1 | Aramid 1500 D/2 + Nylon 66 1260 D/1 | Nylon 66 1260 D/2 |
| Twist count of first twist of Nylon 66 1200 D/1 (TPM: twist per meter) | z 190 | z 190 | z 170 |
| Twist count of first twist (TPM) of aramid 1500 D/2 | z 270 | z 350 | z 470 |
| Twist count of second twist (TPM) | S 270 | S 350 | S 470 |
| Fracture strength (kgf, normal temperature) | 58.0 | 56.4 | 23.8 |
| Fracture strength (kgf, 100°C) | 56.8 | 55.1 | 20.6 |
| Heat resistant adhesive power, H-Test (kgf/9.5 mm) | 13.1 | 14.1 | 12.3 |
| Elastic modulus (GPa) at elongation ratio of 0.5% | 1.4 | 1.2 | 2.4 |
| Elastic modulus (GPa) at elongation ratio of 1.0% | 2.3 | 2.0 | 2.5 |
| Elastic modulus (GPa) at elongation ratio of 3.0% | 3.1 | 2.8 | 1.4 |
| Elastic modulus (GPa) at elongation ratio of 5.0% | 8.1 | 7.5 | 1.3 |

### Properties evaluation

1) The fracture strength and fracture elongation were measured according to ASTM D885.
2) The heat resistant adhesive power were measured according to H-Test ASTM D4776, and the adhesive power after aging the cord for 24 hours at 100°C was measured.

According to the results of the above Table 1, as can be seen from the elastic modulus at various elongation ratios of the cord, the elastic moduli at an elongation of 0.5% of Examples 1 and 2 according to the present invention were lower than the elastic modulus of Comparative Example 1, and it can be seen that as the elongation ratio increases from 0.5% to 5.0%, the elastic modulus of the hybrid cord increases proportionally to the elongation ratio. In the case of the hybrid cords, it can be seen that Example 2 which had a higher twist count of the second twist exhibits the low elastic modulus characteristic of Nylon 66 at a low elongation ratio.

Tires in which a Nylon 66 hybrid cord mixed with an aramid cord, the two having different twist counts, was applied to the reinforcing belt, were produced according to Table 2.

**[Table 2]**

| | Application Example 1 | Application Example 2 | Comparative Application Example 1 |
|---|---|---|---|
| Tire standard | 215/45ZR17 | 215/45ZR17 | 215/45ZR17 |
| Hybrid cord | Example 1 | Example 2 | Comparative Example 1 |
| Number of reinforcing belts | 1 | 1 | 1 |
| Form of reinforcing belt | Full cover | Full cover | Full cover |
| Cord arrangement density (cords/inch) | 28 | 28 | 28 |

An evaluation of the high speed running durability and the steering stability of the tires thus produced, and an evaluation of the running safety after high speed running were carried out as described below, and the results are presented in the following Table 3.

### 1) Evaluation of high speed running durability

The high speed running durability was evaluated according to ECE-R30, which is a high speed running durability test method.

### 2) Evaluation of steering stability

A vehicle equipped with the tire was steered by a professional test driver who can perceive the change in steering stability, and thus the extent of steering stability is examined. Here, the initial steering stability means the steering stability of the early stage of tire installation, and the evaluation of steering stability after high speed running means the steering stability in the state that a test tire has been preheated after running for 30 minutes at a velocity of 230 km/hr.

**[Table 3]**

| Item | | Application Example 1 | Application Example 2 | Comparative Application Example 1 |
|---|---|---|---|---|
| High speed running durability (ECE R30) | | 110 | 116 | 100 |
| Steering stability | Initial | 108 | 111 | 100 |
| | High speed (230 km) | 123 | 139 | 100 |
| Tire diameter retention | Initial | 103 | 108 | 100 |
| | High speed (230 km) | 118 | 129 | 100 |

Index criteria: Less than 100 (poor) < 100 < Greater than 100 (excellent)

As can be seen from the results of Table 3, in Application Example 1 and Application Example 2 in which a reinforcing belt cord reinforced with a hybrid cord of an aramid cord and a Nylon 66 cord, the two having different twist counts, was applied in the tire, the high speed running durability and the steering stability upon low speed running and high speed running were all excellent. On the other hand, the tire which used a conventional Nylon 66 cord as a reinforcing belt cord exhibits relatively poor results in the high speed running durability and the steering stability upon low speed running and high speed running.

As discussed above, the reinforcing belt according to the present invention reinforced with a hybrid cord of an aramid cord and a Nylon 66 cord, the two having different twist counts, exhibits excellent results in the high speed durability and steering stability without compromising the comfort of drive.

## Claims

1. An aramid-Nylon 66 hybrid cord comprising an aramid cord and a Nylon 66 cord each having a first twist, the aramid cord and the Nylon 66 cord being twisted together by a second twist;
wherein the aramid cord, which has a large initial elastic modulus, has a first twist count of the first twist of 200 TPM to 350 TPM, and the Nylon 66 cord, which has a small initial elastic modulus, has a first twist count of the first twist of 50 TPM to 190 TPM;
wherein the ratio of the first twist count of the aramid cord to the first twist count of the Nylon 66 cord is larger than 1;
wherein the ratio of the elastic modulus of the hybrid cord at an elongation ratio of 3% to 5% with respect to the elastic modulus at an elongation ratio of 0.5% to 1% is from 1 to 10; and **characterized in that**:
the twist count of the first twist of the aramid cord and the twist count of the second twist of the hybrid cord are identical;
such that the elastic modulus of the hybrid cord increases proportionally to the elongation ratio as the elongation ratio increases from 0.5% to 5.0%.

2. A pneumatic radial tire comprising the aramid-Nylon 66 hybrid cord according to claim 1 as a reinforcing belt.

## Patentansprüche

1. Aramid-Nylon 66-Hybridcord umfassend einen Aramidcord und einen Nylon 66-Cord, die beide einen ersten Drall aufweisen, wobei der Aramidcord und der Nylon 66-Cord durch einen zweiten Drall zusammengedreht sind;
wobei der Aramidcord, der einen hohen anfänglichen E-.Modul aufweist, eine erste Zahl von Windungen des ersten Dralls von 200 TPM bis 350 TPN aufweist und der Nylon 66-Cord, der einen geringen anfänglichen E-Modul aufweist, eine erste Zahl von Windungen des ersten Dralls von 50 TPM bis 190 TPM aufweist;
wobei das Verhältnis der ersten Anzahl von Windungen des Aramidcords zur ersten Anzahl von Windungen des Nylon 66-Cords höher als 1 liegt;
wobei das Verhältnis des E-Moduls des Hybridcords bei einem Dehnungsverhältnis von 3 % bis 5 % mit Bezug auf den E-Modul bei einem Dehnungsverhältnis von 0,5 % bis 1 % 1 zu 10 beträgt; und **dadurch gekennzeichnet, dass**:
die Anzahl von Windungen des ersten Dralls des Aramidcords und die Anzahl von Windungen des zweiten Dralls des Hybridcords identisch sind;
derart, dass der E-Modul des Hybridcords proportional zum Dehnungsverhältnis mit steigendem Dehnungsverhältnis von 0,5 % auf 5,0 % steigt.

2. Radialluftreifen umfassend den Aramid-Nylon 66-Hybridcord nach Anspruch 1 als Verstärkungsgürtel.

## Revendications

1. Câble hybride aramide-Nylon 66 comprenant un câble d'aramide et un câble de nylon 66 ayant chacun une première torsion, le câble d'aramide et le câble de nylon 66 étant torsadés ensemble avec une seconde torsion,
le câble d'aramide qui a un module d'élasticité initial important, présentant une première valeur de torsion de la première torsion de 200 à 350 TPM, et le câble Nylon 66 qui a un faible module d'élasticité initial, présentant une première valeur de torsion de la première torsion de 50 à 190 TPM,
le rapport entre la première valeur de torsion du câble d'aramide et la première valeur de torsion du câble Nylon 66 étant supérieur à 1,
le rapport entre le module d'élasticité du câble hybride à un taux d'allongement de 3% à 5% et le module d'élasticité à un taux d'allongement de 0,5% à 1% étant de 1 à 10, et
**caractérisé en ce que**
la valeur de torsion de la torsion du câble d'aramide et la valeur de torsion de la seconde torsion du câble hybride sont identiques,
de façon que le module d'élasticité du câble hybride augmente de manière proportionnelle par rapport au taux d'allongement lorsque le taux d'allongement augmente de 0,5% à 5,0%.

2. Pneu radial comprenant le câble hybride aramide-Nylon 66 selon la revendication 1 comme ceinture de renforcement.
